# EUROPÄISCHE PATENTSCHRIFT

(11) **EP 4 225 566 B1**
(45) Veröffentlichungstag und Bekanntmachung des Hinweises auf die Patenterteilung: **11.12.2024**
(21) Anmeldenummer: 21798282.6
(22) Anmeldetag: 04.10.2021
(51) Int. Cl.: B29D 30/06

(54) **HEIZPRESSE UND VERFAHREN ZUR VULKANISATION EINES FAHRZEUGREIFENS IN DIESER HEIZPRESSE UNTER VAKUUM**
HEATING PRESS AND METHOD FOR VULCANIZING A VEHICLE TIRE IN SAID HEATING PRESS UNDER VACUUM
PRESSE CHAUFFANTE ET PROCÉDÉ DE VULCANISATION D'UN PNEU DE VÉHICULE DANS LADITE PRESSE CHAUFFANTE SOUS VIDE

(30) Priorität: 05.10.2020 DE 102020212547
(43) Veröffentlichungstag der Anmeldung: 16.08.2023
(73) Patentinhaber: Continental Reifen Deutschland GmbH, 30175 Hannover (DE)
(72) Erfinder: WENZEL, Karsten, 30165 Hannover (DE); WEDEKIND, Horst, 30165 Hannover (DE); RAMM, Michael, 30165 Hannover (DE); BLICKWEDEL, Holger, 30165 Hannover (DE)
(74) Vertreter: Continental Corporation
(86) Internationale Anmeldenummer: PCT/DE2021/200145
(87) Internationale Veröffentlichungsnummer: WO 2022/073570

(56) Entgegenhaltungen:
- EP-A1- 2 324 996
- FR-A1- 2 980 135
- US-A- 5 145 688

## Beschreibung

Die Erfindung betrifft eine Heizpresse zum Vulkanisieren eines Fahrzeugreifens mit einem Heizpressen-Oberteil und einem Heizpressen-Unterteil, wobei an dem Heizpressen-Oberteil ein die Formteile einer Vulkanisierform aufweisender Container und ein diesen umschließendes zylindrisches Hauben-Oberteil angeordnet ist und wobei das Heizpressen-Oberteil und das Heizpressen-Unterteil mit dem Container derart in Verbindung stehen, so dass beim Herunterfahren des Heizpressen-Oberteils über einen in axialer Richtung erfolgenden Hub die Formteile der Vulkanisierform in radialer Richtung schließbar sind. Die Erfindung betrifft ferner ein Verfahren zur Vulkanisation eines Rohreifens in dieser vorgenannten Heizpresse.

Die vorbeschriebene Heizpresse ist eine Standard-Heizpresse zum Vulkanisieren von Fahrzeugreifen unter atmosphärischen Bedingungen.

Die Heizpresse umfasst einen sogenannten Container, welcher die eigentliche segmentierte Vulkanisierform mit den dem Reifen formgebenden Formsegmenten und Seitenwandschalen sowie Wulstringen umfasst. Zudem sind Heizkammern zum Temperieren der formgebenden Teile angeordnet. Der Container ist während der Vulkanisation von einer geschlossenen Haube umgeben, welche im Stand der Technik primär zur Temperaturisolation während der Vulkanisation dient.

Um Fehlstellen an der Reifenoberfläche möglichst zu vermeiden, muss die Luft zwischen der Oberfläche des Rohreifens und der formgebenden Oberfläche der Formteile der Vulkanisierform entfernt werden. Hierzu ist es generell bekannt, dass 1000 bis 5000 Entlüftungsventile in den Formteilen vorzusehen sind. Durch diese Entlüftungsventile wird die Luft aus dem Formenhohlraum nach radial und axial außen durch Entlüftungskanäle abgeführt. Jedoch müssen die Formteile einer neuen Vulkanisierform mit diesen Ventilen bestückt werden. Weiterhin neigen diese Ventile durch eindringendes Gummi von dem zu vulkanisierenden Reifen zum Verdrecken, so dass diese aufwändig ausgetauscht oder gereinigt werden müssen.

Die Patentschrift US 5 145 688 A offenbart eine Vulkanisierpresse mit einem Ober- und einem Unterteil, die der Präambel des unabhängigen Anspruchs 1 entsprechen.

Der Erfindung liegt die Aufgabe zugrunde, eine Heizpresse zum Vulkanisieren eines Fahrzeugreifens bereitzustellen, mit welcher zuverlässig Fahrzeugreifen unter Verzicht auf Entlüftungsventile in der Vulkanisierform vulkanisiert werden kann. Es ist ebenfalls die Aufgabe der Erfindung, ein Verfahren zum zeiteffizienten Vulkanisieren eines Fahrzeugreifens mit vorgenannter Heizpresse zur Verfügung zu stellen.

Die Aufgabe wird in Bezug auf die Heizpresse gelöst, indem
- das Hauben-Oberteil fest an dem Heizpressen-Oberteil angeordnet ist
- das Hauben-Oberteil in seinem Durchmesser derart bemessen ist, dass es mit geringem Spiel über das Heizpressen-Unterteil schiebbar ist und eine Länge aufweist, welche ausreichend ist, um bei noch geöffneter Vulkanisierform einen geschlossenen Haubeninnenraum mit dem Heizpressen-Unterteil und Heizpressen-Oberteil auszubilden
- zumindest eine vakuumdichte Dichtung an derjenigen Fläche angeordnet ist, an der das Hauben-Oberteil bei geschlossenem Haubeninnenraum über das Heizpressen-Unterteil geschoben ist, um den geschlossenen Haubeninnenraum vakuumdicht abdichtbar zu gestalten, wobei die Dichtung vorzugsweise an dem Heizpressen-Unterteil angeordnet ist,
- bei einem ersten Hub das Heizpressen-Oberteil derart in axialer Richtung P1 verfahrbar ist, dass das Hauben-Oberteil mit dem Heizpressen-Unterteil einen vakuumdichten Haubeninnenraum ausbildet, während die Vulkanisierform jedoch noch luftdurchlässig geöffnet ist
- eine Pumpe und ein Vakuumtank angeordnet sind, mittels derer im Innenraum der Haube nach dem ersten Hub ein Vakuum erzeugbar ist, wobei der Vakuumtank und die Pumpe mit dem Innenraum der Haube in Verbindung stehen und wobei der Vakuumtank und die Pumpe miteinander in Verbindung stehen und
- wobei bei einem zweiten Hub das Heizpressen-Oberteil weiter derart in axialer Richtung P1 verfahrbar ist, dass die Vulkanisierform unter Vakuumbedingungen im Innenraum der Haube vollständig schließbar ist.

Wesentlich ist, dass mit der erfindungsgemäßen Heizpresse Fahrzeugreifen unter Vakuum vulkanisiert werden. Die Vulkanisierform selber weist keine Entlüftungsmittel zur Entlüftung des Formenhohlraumes auf. Durch die Vulkanisation unter Vakuum wird auf die im Stand der Technik in der Vulkanisierform angeordneten 1000 bis 5000 Entlüftungsventile verzichtet, durch welche die Luft aus dem Formenhohlraum nach radial außen abgeleitet wird. Hierdurch ist eine Nachbearbeitung der durch die Entlüftungsmittel erhaltenen Gummiaustriebe am Reifen und ein Austausch bzw. die Reinigung nicht mehr funktionsfähiger Entlüftungsventile nicht mehr notwendig. Dieses ist zeit- und kostengünstig. Zudem erhält der vulkanisierte Reifen durch die Vulkanisation unter Vakuum eine äußere Form, welche absolut frei von Fehlstellen ist und dadurch perfekt anmutet.

Das Vakuum, welches nach dem ersten Hub des Heizpressen-Oberteils innerhalb des geschlossenen Haubeninnenraumes erhaltbar ist, dient dazu, die Luft aus der noch nicht geschlossenen Vulkanisierform, insbesondere zwischen der äußeren Oberfläche des Reifens und den Formflächen der formenden Teile der Vulkanisierform zu entfernen. Nach dem zweiten, unter Vakuumbedingungen im Haubeninnenraum erfolgenden Hub durch das Heizpressen-Oberteil, ist die Vulkanisierform vollständig schließbar. Der zu vulkanisierende Reifen ist hochqualitativ und ohne Fehlstellen zu fertigen.

Es ist selbstverständlich, dass die Haube bzw. Heizpresse zum Erhalt eines vakuumdichten Haubeninnenraumes weitere Dichtungen aufweisen kann. An dem Container oder der Vulkanisierform selber sollen ausdrücklich keine Veränderungen hinsichtlich vakuumdichtender Maßnahmen vorgenommen sein.

Der Begriff Vakuum meint Luftdruck im Bereich von 950mbar (abs) bis 0,1mbar (abs). Zweckmäßig ist es, wenn die Dichtungen Ringdichtungen mit runden, eckigen und/oder flachen Querschnitten sind.

Zweckmäßig ist es für eine zuverlässige Dichtleistung, wenn die Ringdichtung in einer Nut angeordnet ist, wobei der Durchmesser der Ringdichtungen geringfügig größer als die Tiefe der Nut ist. Geringfügig größer meint, dass die Dichtung beim Einbau in die Nut und im dichtenden Zustand maximal 40% komprimiert wird, im Vergleich zur kompressionsfreien Geometrie der Dichtung. Durch die genaue Auslegung der Nut im Verhältnis zur Dichtungsgeometrie wird einer Beschädigung der Dichtung zusätzlich vorgebeugt und die Haltbarkeit verbessert.

In einer Ausführung der Erfindung besteht die Ringdichtung aus Vollmaterial. Das Vollmaterial kann aus einem oder mehreren für Dichtungen bekannten Materialien wie zum Beispiel FKM oder FFKM bestehen. Diese Dichtungen sind kostengünstig und einfach handzuhaben.

In einer anderen Ausführung der Erfindung ist die Ringdichtung ein in ihrem Durchmesser veränderbarer Schlauch. Dieses hat den Vorteil, dass die Ringdichtung geringer belastet wird und erst dann in ihrem Durchmesser vergrößert wird, wenn die Dichtwirkung erforderlich ist.

Vorteilhaft ist es, wenn die Ringdichtung eine differentiell gepumpte Doppelringdichtung ist. Dieses hat den Vorteil, dass etwaige Leckagen mit geringen Pumpleistungen kompensiert werden können.

Zweckmäßig ist es, wenn der Vakuumtank ein Volumen aufweist, welches etwa 5 bis 10mal größer als das Volumen der geschlossenen Haube (inklusive Form, Container, Reifenrohling, Heizbalg) ist. Hierdurch ist sichergestellt, dass in der Haube zuverlässig ein Vakuum erzeugbar ist. Zudem ist die erforderliche Zeit für das Erzeugen des notwendigen Vakuums signifikant reduziert. Dieses kann im Rahmen des normalen Be- und Entladeprozeßes stattfinden.

In Bezug auf das Verfahren mit einer vorgenannten Heizpresse wird die Erfindung dadurch gelöst, dass man folgende Schritte nacheinander ausführt:
a) Beladen der geöffneten Heizpresse durch Einlegen des zu vulkanisierenden Rohreifens in den Container
b) Verfahren des Heizpressen-Oberteils um einen ersten Hub in axialer Richtung in Richtung Heizpressen-Unterteil, bis ein geschlossener Haubeninnenraum aus Hauben-Oberteil, Heizpressen-Oberteil und Heizpressen-Unterteil erhalten ist, während die Vulkanisierform noch geöffnet ist
c) nur im Fall, dass die Ringdichtung ein in ihrem Durchmesser veränderbarer Schlauch ist: Aufpumpen der kreisringförmigen Schlauchdichtung, um den Haubeninnenraum vakuumdicht abzudichten
d) Öffnen der Verbindung zwischen Vakuumtank und Haubeninnenraum zur Erzeugung eines Teil-Vakuums in dem vakuumdicht geschlossenen Haubeninnenraum durch Druckausgleich zwischen Vakuumtank und Haubeninnenraum
e) bei Erhalt des Teil-Vakuums im Haubeninnenraum: Schließen der Verbindung zwischen Vakuumtank und Haubeninnenraum, Öffnen der Verbindung zwischen Haubeninnenraum und Pumpe und Abpumpen der restlich verbliebenden Luft aus dem Haubeninnenraum zur Erzeugung des Vakuums
f) Verfahren des Heizpressen-Oberteiles um einen zweiten Hub, bei dem man den Container derart verfährt, so dass die Vulkanisierform vollständig geschlossen wird und anschließendes Schließen der Verbindung zwischen dem Haubeninnenraum und der Pumpe
g) Vulkanisation des Rohreifen und Öffnen der Verbindung zwischen Pumpe und Vakuumtank und Erzeugung eines Vakuums im Vakuumtank, wobei die Verbindung der Pumpe zu dem Haubeninnenraum und die Verbindung des Vakuumtanks zum Haubeninnenraum jeweils geschlossen sind
h) Öffnen der Heizpresse durch Verfahren des Heizpressen-Oberteils und Entladen des fertig vulkanisierten Reifens
und zur Vulkanisierung jedes weiteren Reifens Wiederholung der Schritte a) - h).

Vorteilhaft ist es, wenn man zur Erleichterung von Schritt h) vorher ein weiteres in der Haube angeordnetes Ventil zum Brechen des Vakuums in der Haube öffnet und anschließend wieder schließt.

Ein Ausführungsbeispiel einer Heizpresse und das Verfahren zur Vakuum-Vulkanisation eines Fahrzeugluftreifens samt weiterer Vorteile sind anhand der nachfolgenden beiden schematischen Figuren beschrieben. Es zeigen die:
- Fig. 1: eine erfindungsgemäße Heizpresse mit Container im geöffneten Zustand,
- Fig. 2: die Heizpresse der Fig. 1 in geschlossenem Zustand.

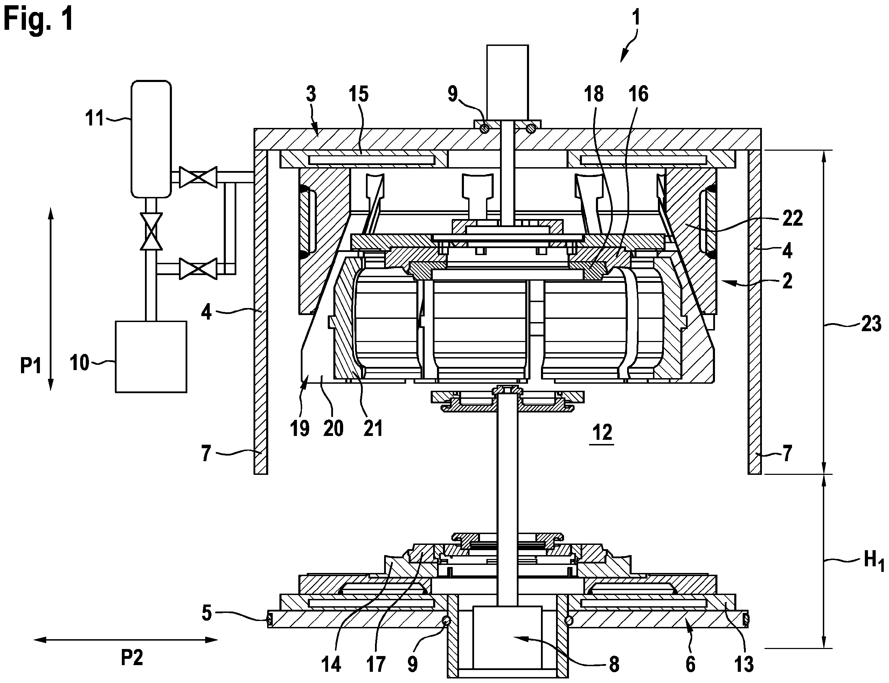

Die Fig. 1 zeigt eine erfindungsgemäße Heizpresse 1 mit einem Container 2 im geöffneten Zustand. Der Reifenrohling kann in die Heizpresse 1 eingebracht werden.

Die Heizpresse 1 umfasst ein Heizpressen-Unterteil 6 und ein Heizpressen-Oberteil 3 mit einem zylindrischen Hauben-Oberteil 4 und weist die entsprechenden Mechanismen zum Positionieren des zu vulkanisierenden Reifens, zur Betätigung der Bestandteile der Vulkanisationsform, zum Einbringen der Heizmedien und zum Entfernen des fertig vulkanisierten Reifens auf. Im Innenraum des Hauben-Oberteils 4 ist ein Container 2 am Heizpressen-Oberteil 3 derart angeordnet, dass beim Verfahren des Heizpressen-Oberteils 3 in axialer Richtung P1 die im Container 2 angeordneten Formteile der Vulkanisierform in radialer Richtung P2 verfahrbar sind.

Es ist ein "Mittenmechanismus" 8 angeordnet, an dem ein Heizbalg (nicht dargestellt) befestigt ist, welcher in den Reifenrohling (nicht dargestellt) einfügbar ist. Zudem sind Düsen (nicht dargestellt) am Mittenmechanismus 8 angeordnet, durch welche ein Heizmedium in den Heizbalg (nicht dargestellt) eingebracht werden kann.

Das zylindrische Hauben-Oberteil 4 ist fest an das Heizpressen-Oberteil 3 montiert und weist eine Länge 23 auf, welche ausreichend ist, um bei noch geöffneter Vulkanisierform, also bei nicht vollständig auf das Heizpressen-Unterteil 6 verfahrenem Heizpressen-Oberteil 3 einen geschlossenen Haubeninnenraum 12 mit dem Heizpressen-Unterteil 6 und Heizpressen-Oberteil 3 auszubilden.

Das Hauben-Oberteil 4 ist luftdicht bzw. vakuumdicht ausgeführt und bildet im geschlossenen Zustand einen vakuumdichten Haubeninnenraum 12 aus. Um das Hauben-Oberteils 4 im geschlossenen Zustand vakuumdicht zu dichten, ist eine Ringdichtung 5 an dem Heizpressen-Unterteil 6 dort angeordnet, wo das Hauben-Oberteils 4 im geschlossenen Zustand der Haube über das Heizpressen-Unterteil 6 gefahren ist. Weitere Ringdichtungen 9 dichten zumindest den Mittenmechanismus 8 gegenüber dem Haubeninnenraum 12 vakuumdicht ab.

Der Container 2 ist ein üblicher, bereits im Stand der Technik bekannter Container 2.

Der Container 2 beinhaltet die segmentierte Vulkanisierform mit einer unteren Heizplatte 13, einer unteren Seitenwandschale 14, einer oberen Heizplatte 15, einer oberen Seitenwandschale 16, einem unteren Wulstring 17 und einem oberen Wulstring 18. Zu jenen Bestandteilen der Vulkanisationsform, die zum Öffnen und Schließen in senkrechter (= axialer) Richtung (Pfeil P1) bewegt werden, gehören der Segmentring 19 bestehend aus sieben bis neun Segmentschuhen 20 und die daran befestigten Profil-/Formsegmente 21 sowie die obere Seitenwandschale 16 mit dem oberen Wulstring 18. Die Segmentschuhe 20 werden zum Schließen und Öffnen der Vulkanisationsform radial, in Richtung des Pfeiles P2, auseinandergefahren. An der oberen Heizplatte 15 ist ein Schließring 22 angeordnet, welcher eine abgeschrägte Innenfläche aufweist, die mit abgeschrägten Außenflächen der Segmentschuhe 20 des Segmentringes 19 derart zusammen wirken, dass beim Schließen der Vulkanisationsform die Segmentschuhe 20 in radialer Richtung zum geschlossenen Segmentring 19 zusammengefahren werden. In der unteren Heizplatte 13, der oberen Heizplatte 15 und im Schließring 22 sind Heizkammern enthalten, in welche zum Vulkanisieren des Reifens zumindest ein Heizmedium, insbesondere Sattdampf (Wasserdampf) eingeleitet wird. Auf diese Weise wird der Rohreifen (nicht dargestellt) von außen über die Segmentschuhe 20, die Seitenwandschalen 14, 16 und die Wulstringe 17, 18 beheizt, sodass diese Heizung üblicherweise als Außenheizung bezeichnet wird.

Ein üblicher Heizbalg (nicht dargestellt) ist in bekannter Weise angeordnet und wird mit zumindest einem Heizmedium unter Druck befüllt, um den Rohreifen in der Form von innen her zu zentrieren, wobei der Heizbalg in eine reifengemäße Torusform gebracht wird. Nachdem der Rohreifen über den Heizbalg von innen erhitzt wird, wird diese Art der Heizung als Innenheizung bezeichnet.

Bei einem ersten Hub H₁ - nicht in den Figuren dargestellt - ist das Hauben-Oberteil 3 derart in axialer Richtung P1 verfahrbar, dass der untere Bereich 7 des Hauben-Oberteils 4 über das Heizpressen-Unterteil 6 fährt und mit diesem einen vakuumdichten Haubeninnenraum 12 ausbildet, während die Vulkanisierform jedoch noch luftdurchlässig geöffnet ist.

Es sind eine Pumpe 10 und ein Vakuumtank 11 angeordnet, mittels derer im Innenraum der Haube 12 nach dem ersten Hub H₁ ein Vakuum erzeugbar ist. Der Vakuumtank 11 und die Pumpe 10 stehen mit dem Innenraum 12 der Haube in Verbindung und der Vakuumtank 11 und die Pumpe 10 stehen miteinander in Verbindung. Durch ein Vakuum im Haubeninnenraum (= Innenraum der Haube) 12, insbesondere während des Einformens und der Vulkanisation des Reifens, ist auf übliche in der Formfläche der Vulkanisierform angeordnete Entlüftungsventile komplett verzichtet.

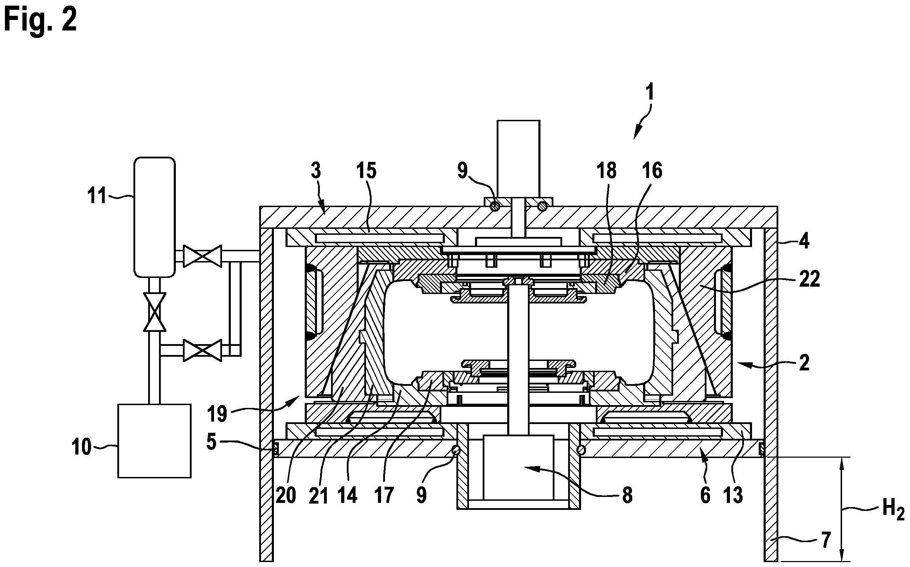

Die Fig. 2 zeigt die Heizpresse 1 der Fig. 1 in geschlossenem Zustand, welcher nach einem zweiten Hub H₂ erhalten ist, bei dem das Heizpressen-Oberteil 3 weiter in axialer Richtung P1 verfahrbar ist, so dass die Vulkanisierform unter Vakuumbedingungen im Innenraum der Haube 12 vollständig geschlossen ist. Die Verbindung zwischen Vakuumtank 11 und Haubeninnenraum 12 ist geschlossen. Anschließend schließt man die Verbindung zwischen dem Haubeninnenraum 12 und der Pumpe 10. Es erfolgt die Vulkanisation des Rohreifen.

Bei einem PKW-Reifen dauert das Vulkanisieren desselben etwa 15 Minuten. Während dieser Zeit wird die Verbindung zwischen Pumpe 10 und Vakuumtank 11 zur Erzeugung eines Vakuums im Vakuumtank 11 geöffnet, wobei die Verbindung der Pumpe 10 zur Haube und die Verbindung des Vakuumtanks 11 zur Haube jeweils geschlossen sind. Nach erfolgter Vulkanisation des Reifens wird das Volumen des Haubeninnenraumes 12 über ein Ventil belüftet (nicht dargestellt) und die Heizpresse 1 geöffnet, um den fertig vulkanisierten Reifen aus dem die Vulkanisierform aufweisenden Container 2 zu entladen. Hierzu fährt das Heizpressen-Oberteil 3 mit dem Container 2 nach oben und die Profilsegmente 21 werden gleichzeitig in radialer Richtung P2 nach außen verfahren. Der Reifen wird freigegeben.

### Bezugszeichenliste

### (Teil der Beschreibung)

- 1: Heizpresse
- 2: Container
- 3: Heizpressen-Oberteil
- 4: Hauben-Oberteil
- 5: Ringdichtung
- 6: Heizpressen-Unterteil
- 7: Unterer Bereich des Hauben-Oberteils
- 8: Mittenmechanismus
- 9: Ringdichtung
- 10: Pumpe
- 11: Vakuumtank
- 12: Innenraum der Haube = Haubeninnenraum
- 13: untere Heizplatte
- 14: untere Seitenwandschale
- 15: obere Heizplatte
- 16: obere Seitenwandschale
- 17: unterer Wulstring
- 18: oberer Wulstring
- 19: Segmentring
- 20: Segmentschuh
- 21: Profilsegment / Formsegment
- 22: Schließring
- 23: Länge des Hauben-Oberteils
- P1: Axiale Richtung
- P2: Radiale Richtung
- H₁: erster Hub
- H₂: zweiter Hub

## Patentansprüche

1. Heizpresse (1) zum Vulkanisieren eines Fahrzeugreifens unter Vakuum
- mit einem Heizpressen-Oberteil (3) und einem Heizpressen-Unterteil (6), wobei an dem Heizpressen-Oberteil (3) ein die Formteile (14, 16, 17, 18, 21) einer Vulkanisierform aufweisender Container (2) und ein diesen umschließendes zylindrisches Hauben-Oberteil (4) angeordnet ist und wobei das Heizpressen-Oberteil (3) und das Heizpressen-Unterteil (6) mit dem Container (2) derart in Verbindung stehen, so dass beim Herunterfahren des Heizpressen-Oberteils (3) über einen in axialer Richtung (P1) erfolgenden Hub die Formteile (14, 16, 17, 18, 21) der Vulkanisierform in radialer Richtung (P2) schließbar sind,
- wobei das Hauben-Oberteil (4) fest an dem Heizpressen-Oberteil (3) angeordnet ist, **dadurch gekennzeichnet dass**
- das Hauben-Oberteil (4) in seinem Durchmesser derart bemessen ist, dass es mit geringem Spiel über das Heizpressen-Unterteil (6) schiebbar ist und eine Länge (23) aufweist, welche ausreichend ist, um bei noch geöffneter Vulkanisierform einen geschlossenen Haubeninnenraum (12) mit dem Heizpressen-Unterteil (6) und Heizpressen-Oberteil (4) auszubilden
- wobei zumindest eine vakuumdichte Dichtung (5) an derjenigen Fläche angeordnet ist, an der das Hauben-Oberteil (4) bei geschlossenem Haubeninnenraum (12) über das Heizpressen-Unterteil (6) geschoben ist, um den geschlossenen Haubeninnenraum (12) vakuumdicht abdichtbar zu gestalten, wobei die Dichtung (5) vorzugsweise an dem Heizpressen-Unterteil (6) angeordnet ist,
- wobei bei einem ersten Hub (Hi) das Heizpressen-Oberteil (3) derart in axialer Richtung (P1) verfahrbar ist, dass das Hauben-Oberteil (4) mit dem Heizpressen-Unterteil (6) einen vakuumdichten Haubeninnenraum (12) ausbildet, während die Vulkanisierform jedoch noch luftdurchlässig geöffnet ist
- wobei eine Pumpe (10) und ein Vakuumtank (11) angeordnet sind, mittels derer im Innenraum der Haube (12) nach dem ersten Hub (Hi) ein Vakuum erzeugbar ist, wobei der Vakuumtank (11) und die Pumpe (10) mit dem Innenraum (12) der Haube (4) in Verbindung stehen und wobei der Vakuumtank (11) und die Pumpe (10) miteinander in Verbindung stehen und
- wobei bei einem zweiten Hub (H₂) das Heizpressen-Oberteil (3) weiter derart in axialer Richtung (P1) verfahrbar ist, dass die Vulkanisierform unter Vakuumbedingungen im Innenraum der Haube (12) vollständig schließbar ist.

2. Heizpresse (1) nach Anspruch 1, **dadurch gekennzeichnet, dass** die Dichtungen Ringdichtungen (5, 9) mit runden, eckigen und/oder flachen Querschnitten sind.

3. Heizpresse (1) nach Anspruch 2, **dadurch gekennzeichnet, dass** die Ringdichtung (5, 9) in einer kreisringförmigen Nut angeordnet ist, wobei der Durchmesser der Ringdichtung (5, 9) geringfügig größer als die Tiefe der Nut ist.

4. Heizpresse (1) nach Anspruch 2 oder 3, **dadurch gekennzeichnet, dass** die Ringdichtung (5, 9) aus Vollmaterial besteht.

5. Heizpresse (1) nach Anspruch 2 oder 3, **dadurch gekennzeichnet, dass** die Ringdichtung (5, 9) ein in ihrem Durchmesser veränderbarer Schlauch ist.

6. Heizpresse (1) nach einem oder mehreren der Ansprüche 3 bis 5, **dadurch gekennzeichnet, dass** die Ringdichtung (5, 9) eine differentiell gepumpte Doppelringdichtung ist.

7. Heizpresse (1) nach einem oder mehreren der vorangehenden Ansprüche, **dadurch gekennzeichnet, dass** der Vakuumtank (11) ein Volumen aufweist, welche etwa 5 bis 10 mal größer als das Volumen der geschlossenen Haube (4) ist.

8. Verfahren zur Vulkanisation eines Fahrzeugluftreifens unter Vakuum in einer Heizpresse (1) nach einem oder mehreren der Ansprüche 1 bis 7, **dadurch gekennzeichnet, dass** man folgende Schritte nacheinander ausführt:
a) Beladen der geöffneten Heizpresse (1) durch Einlegen des zu vulkanisierenden Rohreifens in den Container (2)
b) Verfahren des Heizpressen-Oberteils (4) um einen ersten Hub (Hi) in axialer Richtung (P1) in Richtung Heizpressen-Unterteil (6), bis ein geschlossener Haubeninnenraum (12) aus Hauben-Oberteil (4), Heizpressen-Oberteil (3) und Heizpressen-Unterteil (6) erhalten ist, während die Vulkanisierform noch geöffnet ist
c) nur im Fall, dass die Ringdichtung (5, 9) ein in ihrem Durchmesser veränderbarer Schlauch ist: Aufpumpen der kreisringförmigen Schlauchdichtung, um den Haubeninnenraum (12) vakuumdicht abzudichten
d) Öffnen der Verbindung zwischen Vakuumtank (11) und Haubeninnenraum (12) zur Erzeugung eines Teil-Vakuums in dem vakuumdicht geschlossenen Haubeninnenraum (12) durch Druckausgleich zwischen Vakuumtank (11) und Haubeninnenraum (12)
e) bei Erhalt des Teil-Vakuums im Haubeninnenraum (12): Schließen der Verbindung zwischen Vakuumtank (11) und Haubeninnenraum (12), Öffnen der Verbindung zwischen Haubeninnenraum (12) und Pumpe (10) und Abpumpen der restlich verbliebenden Luft aus dem Haubeninnenraum (12) zur Erzeugung des Vakuums
f) Verfahren des Heizpressen-Oberteiles (3) um einen zweiten Hub (H₂), bei dem man den Container (2) derart verfährt, so dass die Vulkanisierform vollständig geschlossen wird und anschließendes Schließen der Verbindung zwischen dem Haubeninnenraum (12) und der Pumpe (10)
g) Vulkanisation des Rohreifen und Öffnen der Verbindung zwischen Pumpe (10) und Vakuumtank (11) und Erzeugung eines Vakuums im Vakuumtank (11), wobei die Verbindung der Pumpe (10) zu dem Haubeninnenraum (12) und die Verbindung des Vakuumtanks (11) zum Haubeninnenraum (12) jeweils geschlossen sind
h) Öffnen der Heizpresse (1) durch Verfahren des Heizpressen-Oberteils (3) und Entladen des fertig vulkanisierten Reifens
und zur Vulkanisierung jedes weiteren Reifens Wiederholung der Schritte a) - h).

9. Verfahren zur Vulkanisation eines Fahrzeugluftreifens nach Anspruch 8, **dadurch gekennzeichnet, dass** man zur Erleichterung von Schritt h) vorher ein weiteres in der Haube (4) angeordnetes Ventil zum Brechen des Vakuums öffnet und anschließend wieder schließt.

## Claims

1. Heating press (1) for vulcanizing a vehicle tire under a vacuum,
- comprising a heating press upper part (3) and a heating press lower part (6), wherein a container (2) having the mold parts (14, 16, 17, 18, 21) of a vulcanizing mold and a cylindrical hood upper part (4) enclosing said container are arranged on the heating press upper part (3), and wherein the heating press upper part (3) and the heating press lower part (6) are connected to the container (2) in such a way that, when the heating press upper part (3) is being lowered through a stroke that takes place in the axial direction (P1), the mold parts (14, 16, 17, 18, 21) of the vulcanizing mold can be closed in the radial direction (P2),
- wherein the hood upper part (4) is arranged fixedly on the heating press upper part (3),
**characterized in that**
- the diameter of the hood upper part (4) is dimensioned such that said hood upper part can be pushed over the heating press lower part (6) with a small clearance and said hood upper part has a length (23) which is sufficient to form a closed hood interior space (12) with the heating press lower part (6) and heating press upper part (4) when the vulcanizing mold is still open,
- wherein at least one vacuum-tight seal (5) is arranged on that surface at which the hood upper part (4), when the hood interior space (12) is closed, is pushed over the heating press lower part (6), in order to make the closed hood interior space (12) sealable in a vacuum-tight manner, wherein the seal (5) is preferably arranged on the heating press lower part (6),
- wherein, in the course of a first stroke (H₁), the heating press upper part (3) can be moved in the axial direction (P1) in such a way that the hood upper part (4) forms a vacuum-tight hood interior space (12) with the heating press lower part (6), although the vulcanizing mold remains open in an air-permeable manner,
- wherein a pump (10) and a vacuum tank (11), by means of which a vacuum can be generated in the interior space of the hood (12) after the first stroke (H₁), are provided, wherein the vacuum tank (11) and the pump (10) are connected to the interior space (12) of the hood (4), and wherein the vacuum tank (11) and the pump (10) are connected to one another, and
- wherein, in the course of a second stroke (H₂), the heating press upper part (3) can be moved further in the axial direction (P1) in such a way that the vulcanizing mold can be completely closed under vacuum conditions in the interior space of the hood (12).

2. Heating press (1) according to Claim 1, **characterized in that** the seals are ring seals (5, 9) with circular, polygonal and/or flat cross sections.

3. Heating press (1) according to Claim 2, **characterized in that** the ring seal (5, 9) is arranged in a circular-ring-shaped groove, wherein the diameter of the ring seal (5, 9) is slightly greater than the depth of the groove.

4. Heating press (1) according to Claim 2 or 3, **characterized in that** the ring seal (5, 9) consists of solid material.

5. Heating press (1) according to Claim 2 or 3, **characterized in that** the ring seal (5, 9) is a hose of variable diameter.

6. Heating press (1) according to one or more of Claims 3 to 5, **characterized in that** the ring seal (5, 9) is a differentially inflated double ring seal.

7. Heating press (1) according to one or more of the preceding claims, **characterized in that** the vacuum tank (11) has a volume that is approximately 5 to 10 times greater than the volume of the closed hood (4).

8. Method for vulcanizing a pneumatic vehicle tire under a vacuum in a heating press (1) according to one or more of Claims 1 to 7, **characterized in that** the following steps are performed in succession:
a) loading the opened heating press (1) by placing the green tire for vulcanization into the container (2),
b) moving the heating press upper part (4) through a first stroke (H₁) in the axial direction (P1) toward the heating press lower part (6), until a closed hood interior space (12) composed of hood upper part (4), heating press upper part (3) and heating press lower part (6) is obtained, while the vulcanizing mold remains open,
c) only if the ring seal (5, 9) is a hose of variable diameter: inflating the circular-ring-shaped hose seal in order to seal off the hood interior space (12) in a vacuum-tight manner,
d) opening the connection between the vacuum tank (11) and the hood interior space (12) in order to generate a partial vacuum, by way of pressure equalization between the vacuum tank (11) and the hood interior space (12), in the hood interior space (12) that has been closed in a vacuum-tight manner,
e) when the partial vacuum is obtained in the hood interior space (12): closing the connection between the vacuum tank (11) and the hood interior space (12), opening the connection between the hood interior space (12) and the pump (10), and pumping the remaining air out of the hood interior space (12) in order to generate the vacuum,
f) moving the heating press upper part (3) through a second stroke (H₂), in the course of which the container (2) is moved in such a way that the vulcanizing mold is completely closed, and subsequently closing the connection between the hood interior space (12) and the pump (10),
g) vulcanizing the green tire and opening the connection between the pump (10) and the vacuum tank (11) and generating a vacuum in the vacuum tank (11), wherein the connection of the pump (10) to the hood interior space (12) and the connection of the vacuum tank (11) to the hood interior space (12) are each closed,
h) opening the heating press (1) by moving the heating press upper part (3) and removing the fully vulcanized tire,
and repeating the steps a) - h) in order to vulcanize each further tire.

9. Method for vulcanizing a pneumatic vehicle tire according to Claim 8, **characterized in that**, to facilitate step h), this is preceded by a further valve arranged in the hood (4) being opened in order to deplete the vacuum and subsequently being closed again.

## Revendications

1. Presse chauffante (1) permettant de vulcaniser un pneu de véhicule sous vide
- comportant une partie supérieure de presse chauffante (3) et une partie inférieure de presse chauffante (6), un récipient (2) présentant les parties de moule (14, 16, 17, 18, 21) d'un moule de vulcanisation et une partie supérieure de capot (4) cylindrique entourant celui-ci étant disposés au niveau de la partie supérieure de presse chauffante (3) et la partie supérieure de presse chauffante (3) et la partie inférieure de presse chauffante (6) étant en liaison avec le récipient (2) de telle sorte que, lors de l'abaissement de la partie supérieure de presse chauffante (3) par le biais d'une course s'effectuant dans la direction axiale (P1), les parties de moule (14, 16, 17, 18, 21) du moule de vulcanisation puissent être fermées dans la direction radiale (P2),
- la partie supérieure de capot (4) étant disposée fixement au niveau de la partie supérieure de presse chauffante (3),
**caractérisée en ce que**
- la partie supérieure de capot (4) est dimensionnée en termes de diamètre de telle sorte qu'elle peut être poussée sur la partie inférieure de presse chauffante (6) avec un faible jeu et présente une longueur (23), laquelle est suffisante pour former un espace intérieur de capot (12) fermé avec la partie inférieure de presse chauffante (6) et la partie supérieure de presse chauffante (4) lorsque le moule de vulcanisation est encore ouvert,
- au moins un joint d'étanchéité (5) étanche au vide étant disposé au niveau de la surface au niveau de laquelle la partie supérieure de capot (4) est poussée sur la partie inférieure de presse chauffante (6) lorsque l'espace intérieur de capot (12) est fermé, afin de concevoir l'espace intérieur de capot (12) fermé de manière à pouvoir être étanchéifié de manière étanche au vide, le joint d'étanchéité (5) étant disposé de préférence au niveau de la partie inférieure de presse chauffante (6),
- lors d'une première course (H1), la partie supérieure de presse chauffante (3) étant déplaçable dans la direction axiale (P1) de telle sorte que la partie supérieure de capot (4) forme avec la partie inférieure de presse chauffante (6) un espace intérieur de capot (12) étanche au vide, pendant que le moule de vulcanisation est cependant encore ouvert de manière perméable à l'air,
- une pompe (10) et un réservoir à vide (11) étant prévus, au moyen desquels un vide peut être généré dans l'espace intérieur du capot (12) après la première course (H1), le réservoir à vide (11) et la pompe (10) étant en liaison avec l'espace intérieur (12) du capot (4) et le réservoir à vide (11) et la pompe (10) étant en liaison l'un avec l'autre et
- lors d'une deuxième course (H2), la partie supérieure de presse chauffante (3) étant déplaçable davantage dans la direction axiale (P1), de telle sorte que le moule de vulcanisation puisse être fermé complètement sous des conditions de vide dans l'espace intérieur du capot (12).

2. Presse chauffante (1) selon la revendication 1, **caractérisée en ce que** les joints d'étanchéité sont des joints d'étanchéité annulaires (5, 9) présentant des sections transversales circulaires, polygonales et/ou plates.

3. Presse chauffante (1) selon la revendication 2, **caractérisée en ce que** le joint d'étanchéité annulaire (5, 9) est disposé dans une rainure de forme annulaire circulaire, le diamètre du joint d'étanchéité annulaire (5, 9) étant légèrement supérieur à la profondeur de la rainure.

4. Presse chauffante (1) selon la revendication 2 ou 3, **caractérisée en ce que** le joint d'étanchéité annulaire (5, 9) est constituée de matériau plein.

5. Presse chauffante (1) selon la revendication 2 ou 3, **caractérisée en ce que** le joint d'étanchéité annulaire (5, 9) est un tuyau souple de diamètre variable.

6. Presse chauffante (1) selon l'une ou plusieurs des revendications 3 à 5, **caractérisée en ce que** le joint d'étanchéité annulaire (5, 9) est un joint d'étanchéité annulaire double gonflé de manière différentielle.

7. Presse chauffante (1) selon l'une ou plusieurs des revendications précédentes, **caractérisée en ce que** le réservoir à vide (11) présente un volume, lequel est approximativement 5 à 10 fois supérieur au volume du capot (4) fermé.

8. Procédé de vulcanisation d'un pneu de véhicule sous vide dans une presse chauffante (1) selon l'une ou plusieurs des revendications 1 à 7, **caractérisé en ce qu'**on effectue les étapes suivantes les unes après les autres :
a) chargement de la presse chauffante (1) ouverte par insertion du pneu cru à vulcaniser dans le récipient (2)
b) déplacement de la partie supérieure de presse chauffante (4) sur une première course (H1) dans la direction axiale (P1) en direction de la partie inférieure de presse chauffante (6), jusqu'à ce qu'un espace intérieur de capot (12) fermé constitué de la partie supérieure de capot (4), de la partie supérieure de presse chauffante (3) et de la partie inférieure de presse chauffante (6) soit obtenu, pendant que le moule de vulcanisation est encore ouvert
c) seulement dans le cas où le joint d'étanchéité annulaire (5, 9) est un tuyau souple de diamètre variable : gonflage du joint d'étanchéité tubulaire de forme annulaire circulaire, afin d'étanchéifier l'espace intérieur de capot (12) de manière étanche au vide
d) ouverture de la liaison entre le réservoir à vide (11) et l'espace intérieur de capot (12) pour la génération d'un vide partiel dans l'espace intérieur de capot (12) fermé de manière étanche au vide, par égalisation de la pression entre le réservoir à vide (11) et l'espace intérieur de capot (12)
e) lors de l'obtention du vide partiel dans l'espace intérieur de capot (12) : fermeture de la liaison entre le réservoir à vide (11) et l'espace intérieur de capot (12), ouverture de la liaison entre l'espace intérieur de capot (12) et la pompe (10) et pompage de l'air restant de manière résiduelle hors de l'espace intérieur de capot (12) pour la génération du vide
f) déplacement de la partie supérieure de presse chauffante (3) sur une deuxième course (H2), lors duquel on déplace le récipient (2) de telle sorte que le moule de vulcanisation soit complètement fermé et ensuite fermeture de la liaison entre l'espace intérieur de capot (12) et la pompe (10)
g) vulcanisation du pneu cru et ouverture de la liaison entre la pompe (10) et le réservoir à vide (11) et génération d'un vide dans le réservoir à vide (11), la liaison de la pompe (10) à l'espace intérieur de capot (12) et la liaison du réservoir à vide (11) à l'espace intérieur de capot (12) étant respectivement fermées
h) ouverture de la presse chauffante (1) par déplacement de la partie supérieure de presse chauffante (3) et déchargement du pneu complètement vulcanisé
et, pour la vulcanisation de chaque autre pneu, répétition des étapes a) - h).

9. Procédé de vulcanisation d'un pneu de véhicule selon la revendication 8, **caractérisé en ce que**, pour faciliter l'étape h), on ouvre préalablement une autre soupape disposée dans le capot (4) pour interrompre le vide et ont la referme ensuite.
